# EUROPÄISCHE PATENTSCHRIFT

(11) **EP 2 223 723 B1**
(45) Veröffentlichungstag und Bekanntmachung des Hinweises auf die Patenterteilung: **10.04.2013**
(21) Anmeldenummer: 10153300.8
(22) Anmeldetag: 11.02.2010
(51) Int. Cl.: B01D 29/01

(54) **Vorrichtung und Verfahren zur Flüssigkeitsseparation**
Method and device for separating liquid
Dispositif et procédé de séparation de liquide

(30) Priorität: 13.02.2009 DE 102009008904
(43) Veröffentlichungstag der Anmeldung: 01.09.2010
(73) Patentinhaber: GoSaTec GmbH, 48249 Dülmen (DE)
(72) Erfinder: Goßling, Karl-Heinz, 48249, Dülmen (DE)
(74) Vertreter: Becker Kurig Straus

(56) Entgegenhaltungen:
- EP-A1- 0 463 292
- DE-A1- 4 401 705
- DE-C1- 4 032 145

## Beschreibung

### Gebiet der Erfindung

Die vorliegende Erfindung betrifft eine Vorrichtung und ein Verfahren zur Flüssigkeits-separation, beispielsweise zur Trennung von festen und flüssigen Anteilen von beispielsweise Rohgülle oder Schlämmen mit doppelt wirkendem Kolben.

### Stand der Technik

Bei der in der Biogasproduktion stattfindenden Vergärung entsteht nicht nur Biogas, sondern es fallen alle Stoffe, die während der Vergärung nicht in Methan oder Kohlendioxid umgewandelt werden, als Gärrest mit stark schwankenden Trockensubstanzgehalten an. Aufgrund der in der Flüssigkeit enthaltenen Feststoffen kommt es im Fermenter oder auch im Gärrestelager zu Schwimm- und Sinkschichtbildungen, die ein arbeits- und zeitintensives Rühren vor jeder Entnahme erforderlich machen. Darüber hinaus bedeuten große Volumina in der Biogasproduktion gleichzeitig auch hohe Deponie/Lagerkosten und der hohe Wassergehalt erschwert die weitere Nutzung des Gärrests, da hohe Kosten einen Transport unrentabel machen. Deshalb ist es wünschenswert, Gärreste und andere Feuchtmassen wie beispielsweise Klär-, Deponie- oder Prozessschlämme in ihre festen und flüssigen Anteile zu trennen.

Die einfachste Möglichkeit der Trennung ist die so genannte Separierung. Dabei wird die Flüssigkeit mechanisch oder auch chemisch von den darin enthaltenen Feststoffen abgetrennt.

Besonders im Bereich der Klärschlammaufbereitung kommen seit mehr als 40 Jahren Separatoren, so genannte Filterpressen, zum Einsatz, bei denen zwischen Kammer- und Membranfilterpressen unterschieden wird.
Kammerfilterpressen, bekannt beispielsweise aus der OE 314 558, sind diskontinuierliche Druckfilter. Der Druckraum wird dabei durch mehrere hintereinander angeordnete Kammerplatten gebildet, die mit Filtertüchern bespannt und über Bohrungen miteinander verbunden sind. Die einzelnen Kammerplatten werden in einem Gestell entweder seitlich oder oben aufgehängt und hydraulisch zusammengepresst. Der zu filtrierende Schlamm wird über Pumpen in diese Druckkammern gefördert, wobei die Flüssigkeit die porösen Filtertücher durchströmt und der zurückgehaltene Feststoff als Filterkuchen in der Kammer verbleibt. Beim Füllen der Presse wachsen zwei Filterkuchenhälften proportional mit der durchgesetzten Schlammmenge zeitlich parallel in jeder einzelnen Kammer allmählich zusammen und füllen am Ende der Filtration das gesamte Kammervolumen aus. Um die Presse zu öffnen müssen die Kammern getrennt werden und der Filterkuchen kann entfernt werden.

Membranfilterpressen haben prinzipiell den gleichen Aufbau wie Kammerfilterpressen, wobei jedoch jede zweite oder bei speziellen Anwendungen auch jede Platte mit einer elastischen Pressmembran ausgerüstet ist. Der Prozessablauf ist hier zweistufig. Zuerst werden die Kammern mit dem zu filtrierenden Produkt wie bei den Kammerfilterpressen gefüllt, allerdings nicht vollständig. Daraufhin wird die Füllpumpe abgeschaltet und Luft oder Wasser hinter die Pressmembranen gedrückt. Das Pressmedium kommt dabei nicht in Kontakt mit dem Filtrationsprodukt und kann wieder verwendet werden.

Bei beiden Arten von Filterpressen wird zum Öffnen des Plattenpakets für den Kuchenaustrag nach Filtrationsende der Hydraulikzylinder eingefahren und die Filterplatten durch einen Transportmechanismus, beispielsweise durch eine Kette oder reversierenden Wagen, einzeln zurückgezogen. Obwohl der Prozessablauf in Filterpressen weitestgehend automatisierbar ist, muss das Öffnen und Schließen der Presse und vor allem der Kuchenaustrag in der Regel beaufsichtigt und gegebenenfalls auch manuell unterstützt werden.

In den letzten Jahren haben andere Entwässerungsverfahren vor allem im Bereich der Klärschlammentwässerung das Kammerfilterpressen stark verdrängt. Hier werden vor allem mit Hilfe von Schneckenpressen, Zentrifugen oder Dekantierzentrifugen die festen und flüssigen Bestandteile getrennt.

Die AT 411 451 B offenbart eine Schneckenpresse zum Abtrennen von Flüssigkeiten aus Feststoff-Flüssigkeits-Mischungen, die in einem mit Flüssigkeitsdurchtritten versehenen und in Segmente aufgeteilten Filtratmantel rotierend vorliegt. Durch Drosselschieber an den Ablauföffnungen im unteren Filtratmantelbereich kann zur Optimierung der Kompressionskurve ein Druckgefälle in Längsrichtung der Schnecke eingestellt werden.

Werden Zentrifugen zur Separation verwendet, werden die Feststoffe oder Flüssigkeiten höherer Dichte von Flüssigkeiten geringerer Dichte durch Fliehkräfte in einer sich drehenden Trommel getrennt. Die schweren Rückstände, wie die Feststoffpartikel, sammeln sich im Inneren der Trommel an dem größten Durchmesser. Im Gegensatz zu herkömmlichen Zentrifugen ist durch das Vorhandensein von automatischen Entleerungssystemen mit Zentrifugenseparatoren ein halb- oder vollautomatischer Betrieb möglich. Die abgetrennten Feststoffe werden nach einer vorbestimmten Zeit, die von Feststoffvolumenprozent im Zulauf, Schlammraumkapazität der Trommel und Zulaufmenge abhängig ist, aus dem Trommelkörper durch Öffnung so genannter Schieberböden und damit verbundener Freigabe von Öffnungsschlitzen im Trommelkörper aus dem Zentrifugenseparator herausgeschleudert.

Eine Weiterentwicklung ist die so genannte Dekantierzentrifuge, bei der die festen Bestandteile der zu trennenden Stoffe mit einer langsamer oder schneller laufenden Schnecke stetig aus der Zentrifugentrommel entfernt werden. Feststoff und Flüssigkeit werden hier kontinuierlich ausgetragen. Die Dekantierzentrifuge kommt in der Regel bei einem Feststoffgehalt im Zulauf von etwa 3 % zum Einsatz. Die US 5,234,400 beschreibt eine derartige Dekantierzentrifuge mit einem länglichen Vollmantel, der um eine Horizontalachse rotiert und einer in dem Mantel angeordneten Schnecke, die sich die mit einer Geschwindigkeit rotiert, die sich etwas von der des Vollmantels unterscheidet. Eine Anzahl Auslassstutzen für den schweren Anteil ist in geringem Abstand vom kegelstumpfförmigen Ende des Vollmantels um einen quer verlaufenden Abschnitt des Vollmantels angeordnet, und der leichte Anteil einer Suspension wird durch Öffnungen am äußeren Ende des kegelstumpfförmigen Teils des Vollmantels entlassen.
Als weitere Alternative zu den Filterpressen können so genannte Kolben/Zylinder-Systeme oder Zylinderpressen gezählt werden. Hier werden die Feststoffpartikel "ausgepresst", was im Wesentlichen in drei Schritten erfolgt: Zuerst erfolgt das Füllen des Zylinders, teilweise mit Vorfiltration über eine externe Pumpe, dann wird die eingefüllte Suspension durch Belastung mit einem Platte ausgedrückt und zuletzt wird das System geöffnet, um den Kuchenaustrag zu entfernen. Im Folgenden sind einige derartige Kolben/Zylinder-Systeme beschrieben.

Die DE 299 04 504 U1 beispielsweise betrifft eine mechanische Kolbenpresse, bei der der zu verdichtende Schlamm durch eine Rohrleitung in einen Zylinder gepumpt und von einem Kolben unter Druck gesetzt wird, so dass das in dem Schlamm enthaltene Wasser durch ein Sieb ausgepresst wird. Über ein Quetschventil wird der ausgepresste Kuchen aus dem Kolben geführt.

Die DE 198 12 459 A1 offenbart eine Pressanlage zur Verdichtung von öl- oder emulsionshaltigem Schleifschlamm zu Pellets. Dabei wird zur Verdichtung des Schleifschlamms ein Kolben in einem als Pressraum dienenden Verdichtungszylinder mittels Hydraulik horizontal bewegt. Zum Entfernen der Pellets wird der Verdichtungszylinder verschoben.

Die DE 196 04 662 C1 betrifft eine horizontal arbeitende Entwässerungspresse für Flüssigschlamm, bei der Schlamm in ein Drainagemodul eingebracht wird, das sich innerhalb eines Druckrohrs befindet und dort mittels eines Kolbens gegen eine Endplatte in dem Druckrohr gepresst wird. Das ausgedrückte Wasser wird aus dem unteren Bereich des Druckrohres abgeführt und die zurückbleibenden verfestigten Bestandteile des Schlammes fallen nach Rücknahme des Plattes und des Druckrohres in einen Abführschacht.

Bei der in US 3,070,003 aufgeführten hydraulischen Presse wird ein Presskolben von einer Beschickungsposition, bei der das zu entwässernde Material in eine Druckkammer geleitet wird, in die Druckkammer geführt, wo er das Material gegen einen Endbereich auspresst und das enthaltene Wasser durch Stabrechen abgeführt wird. Zum Entfernen des verdichteten Materials wird die Endplatte mittels Hydraulikzylinder von der Druckkammer weg bewegt, so dass das Material einfach herausfallen kann.

Ein weiteres bekanntes Verfahren zur Druckentwässerung von wässrigen Schlämmen ist aus der DE 40 32 145 C1 bekannt.

Die oben genannten Verfahren und Vorrichtungen haben den großen Nachteil, dass lediglich ein Filtrierungsschritt innerhalb derselben Vorrichtung erfolgen kann. Dabei muss zuvor entschieden werden, welche Porengröße der Filter für die jeweils zu separierende Flüssigkeit haben soll. Bei einer zu großen Porengröße erreicht das Filtrat nicht die gewünschte Reinheit und wird stattdessen eine geringe Porengröße gewählt, so baut sich vor dem Filter zu schnell eine dicke Schicht Filterkuchen auf, die ein Auspressen weiterer zugeführter Flüssigkeit erschwert und daher häufiger abgetragen werden muss.

Für eine qualitativ hochwertigere Auftrennung mit mehr als nur einer Filtrierungsstufe muss das Filtrat in eine weitere Vorrichtung eingebracht werden, was wiederum hohe Anschaffungs- und Unterhaltskosten bedeutet. Darüber hinaus ist bei vielen Vorrichtungen und Verfahren eine länger andauernde Unterbrechung zur Entfernung des Filterkuchens durch Verschieben des gesamten Zylinders nötig. Dabei kommen weitere Bewegungseinrichtungen wie beispielsweise Hydraulikaggregate zum Einsatz, die wiederum mit erhöhtem Kosten- und Wartungsaufwand verbunden sind. Außerdem ist solch eine Öffnung in Bezug auf die dauerhafte Dichtigkeit der Vorrichtung von Nachteil. Derartige Verfahren bzw. Vorrichtungen sind zudem häufig unwirtschaftlich, da die Presse nach kurzer Zeit bereits "voll" ist und das Austragen des schnell gebildeten Filterkuchens zuviel Zeit in Anspruch nimmt.

Ein weiterer Nachteil der bekannten Vorrichtungen und Verfahren ist darin zu sehen, dass zum Befüllen bzw. Entleeren der Vorrichtungen häufig weitere Pumpen nötig sind, die ebenfalls Betriebs- und Instandhaltungskosten verursachen.

### Zusammenfassung der Erfindung

In Anbetracht der vorstehenden Nachteile ist eine Aufgabe der vorliegenden Erfindung, ein verbessertes Verfahren und eine verbesserte Vorrichtung zur Flüssigkeits-Separation/ Trennung bereitzustellen, die sowohl in Bezug auf Quantität und Qualität als auch unter ökonomischen und betrieblichen Gesichtspunkten den bisher bekannten Verfahren und Vorrichtungen überlegen sind.

Diese Aufgabe wird jeweils durch die Vorrichtungen mit den Merkmalen der Ansprüche 1 bzw. 10 gelöst. Vorteilhafte Ausfihrungsfonmen, sowie ein Verfahren sind in den abhängigen Ansprüche beschrieben.

Zur Lösung der Aufgabe wird eine Vorrichtung zur Flüssigkeits-Separation/Trennung bereitgestellt, die einen Behälter mit zwei voneinander räumlich beabstandeten ersten und zweiten Filtereinrichtungen umfasst, die zu einer bestimmten Achse des Behälters im Wesentlichen senkrecht angeordnet sind und den Behälter in eine erste und eine zweite Außenkammer und eine zentrale Kammer unterteilen. In der zentralen Kammer ist eine Platte angeordnet, die mittels einer geeigneten Einrichtung senkrecht entlang der bestimmten Achse des Behälters bewegt werden kann und deren äußerer Umfang mit dem inneren Umfang der zentralen Kammer im Wesentlichen abschließt, um eine Dichtigkeit herzustellen, ohne jedoch deren Bewegungsfähigkeit stark zu behindern.

In einer ersten Ausführungsform mündet in die zentrale Kammer nahe der ersten Filtereinrichtung eine erste steuerbare/verschließbare Leitung zum Zuführen der aufzutrennenden Flüssigkeit. Eine zweite steuerbare Leitung dient als Verbindungsleitung, um die erste Außenkammer mit der zentralen Kammer zu verbinden und mündet nahe der zweiten Filtereinrichtung in die zentrale Kammer, und eine ebenfalls steuerbare dritte Leitung mündet in der zweiten Außenkammer und dient als Abflussleitung für das Filtrat. Des Weiteren ist mindestens eine verschließbare Öffnung in der Außenwandung der zentralen Kammer angeordnet, um in diese einen Zugang zu ermöglichen.

In einer bevorzugten Ausführungsform umfasst die erste Filtereinrichtung mindestens einen Grobfilter und die zweite Filtereinrichtung mindestens einen Feinfilter.

In einer weiteren Ausführungsform weist der Grobfilter eine Porengröße von 0,1 bis 3,0 mm auf und der Feinfilter eine Porengröße von 0,05 - 0,2 mm.

In einer weiteren Ausführungsform sind in der zentralen Kammer jeder Filtereinrichtung mehrere Öffnungen benachbart angeordnet. In einer besonderen Ausführungsform sind die Öffnungen nach außen öffnende Klappen.

In einer Ausführungsform ist an mindestens einer Filtereinrichtung auf der zur zentralen Kammer gerichteten Seite mindestens ein Schaber zum Abschaben des sich an dem Filter bildenden Filterkuchens angeordnet.

In einer bevorzugten Ausführungsform wird in der Vorrichtung bzw. mit dem Verfahren der vorliegenden Erfindung Rohgülle separiert, also die festen und flüssigen Anteile von Rohgülle getrennt. Weitere Anwendungen können beispielsweise das Auftrennen von Klär-, Deponie- oder Industrieschlämmen wie beispielsweise Prozessschlämmen sein.

In einer zweiten Ausführungsform münden mehrere steuerbare/verschließbare erste Leitungen in die zentrale Kammer nahe der ersten und der zweiten Filtereinrichtung zum Zuführen der aufzutrennenden Flüssigkeit. Ebenfalls steuerbare zweite Leitungen münden in die beiden Außenkammern und dienen als Abflussleitung für das Filtrat. Des Weiteren ist mindestens eine verschließbare Öffnung in der Außenwandung der zentralen Kammer angeordnet, um in diese einen Zugang zu ermöglichen

In einer bevorzugten Ausführungsform umfassen die ersten und zweiten Filtereinrichtungen mindestens einen Grobfilter oder mindestens einen Feinfilter. Vorzugsweise weist der Grobfilter eine Porengröße von 0,1 bis 3,0 mm auf oder der Feinfilter eine Porengröße von 0,05 - 0,2 mm.

In einer weiteren Ausführungsform liegen in der zentralen Kammer jeder Filtereinrichtung mehrere Öffnungen benachbart vor.

In einer bevorzugten Ausführungsform ist an mindestens einer Filtereinrichtung auf der zur zentralen Kammer gerichteten Seite mindestens ein Schaber zum Abschaben des Filterkuchens angeordnet ist.

In einer weiteren Ausführungsform sind die Öffnungen nach außen öffnende Klappen.

Gemäß einer dritten Ausführungsform wird weiter ein Verfahren zur Flüssigkeits-Separation/Trennung bereitgestellt, bei dem in einem ersten Schritt eine zu separierende Flüssigkeit in die zentrale Kammer einer Vorrichtung nahe der ersten Filtereinrichtung eingebracht wird. Anschließend wird die bei dem ersten Schritt in der Nähe der zweiten Filtereinrichtung befindliche Platte in Richtung des ersten Filters bewegt, wobei der flüssige Bestandteil der Beschickung durch den ersten Filter in die erste Außenkammer gepresst wird. Die dort anfallende Flüssigkeit / das erste Filtrat wird über die Verbindungsleitung von der ersten Außenkammer in die zentrale Kammer in das durch die zweite Filtereinrichtung und die Platte definierte Lumen überführt, worauf das in der zentralen Kammer befindliche erste Filtrat durch eine zweite Filtereinrichtung in eine zweite Außenkammer gepresst wird. Anschließend kann das in der zweiten Außenkammer erhaltene zweite Filtrat entnommen werden.

In einer Ausführungsform wird er an den Filtereinrichtungen entstehende Filterkuchen nach einer bestimmten Anzahl an Zyklen teilweise oder auch ganz entfernt.

In einer Ausführungsform erfolgt das Entfernen des Filterkuchens an den Filtereinrichtungen mittels eines automatischen Schabers.

Gemäß einer vierten Ausführungsform wird weiter ein Verfahren zur Flüssigkeits-Separation/Trennung bereitgestellt, bei dem in einem ersten Schritt eine zu separierende Flüssigkeit in die zentrale Kammer einer Vorrichtung nahe der ersten und der zweiten Filtereinrichtung eingebracht wird. Anschließend wird die sich in der Mitte der Vorrichtung befindliche Platte in Richtung des ersten Filters bewegt, wobei der flüssige Bestandteil der Beschickung durch den ersten Filter in die erste Außenkammer gepresst wird. Die dort anfallende Flüssigkeit / das erste Filtrat wird über die Abflussleitung von der ersten Außenkammer abgeführt. Beim Bewegen der Platte in Richtung des zweiten Filters wird die sich an dem zweiten Filter befindende Flüssigkeit durch den Filter in die zweite Außenkammer gepresst. Die dort anfallende Flüssigkeit / das zweite Filtrat wird über die Abflussleitung von der zweiten Außenkammer abgeführt.

In einer Ausführungsform wird er an den Filtereinrichtungen entstehende Filterkuchen nach einer bestimmten Anzahl an Zyklen teilweise oder auch ganz entfernt.

In einer Ausführungsform erfolgt das Entfernen des Filterkuchens an den Filtereinrichtungen mittels eines automatischen Schabers.

Weitere Vorteile, Merkmale und Anwendungsmöglichkeiten der vorliegenden Erfindung ergeben sich aus der nachfolgenden Beschreibung von Ausführungsbeispielen in Verbindung mit der Zeichnung.

Fig. 1 zeigt eine Vorrichtung zum Trennen von festen und flüssigen Anteilen mit doppelt wirkendem Kolben und doppelter Filtrierung.

Fig. 2 zeigt eine Vorrichtung zum Trennen von festen und flüssigen Anteilen mit doppelt wirkendem Kolben und einfacher Filtrierung.

Die vorliegende Erfindung liefert eine Vorrichtung zur Trennung von flüssigen und festen Bestandteilen einer feste Bestandteile enthaltenden Flüssigkeit, wie beispielsweise Schlämmen, Rohgülle und dergleichen.

Die in den Figuren dargestellte Vorrichtung weist einen Behälter auf, der aus jeglichem Material hergestellt sein kann, das denen in der Vorrichtung ausgeübten Drücken standhält, So kann der Behälter beispielsweise aus (rostfreiem) Stahl, Aluminium, Keramik oder geeigneten Kunststoffen wie beispielsweise GFK (Glasfaser verstärkter Kunststoff) gefertigt sein. Der Behälter kann weiter jegliche dem Fachmann geeignet erscheinende Form aufweisen, wie die Form eines Zylinders mit geraden oder halbkugelförmigen Enden, oder die eines Würfels oder Quaders.

In dem Behälter sind zwei Filtereinrichtungen räumlich getrennt voneinander und senkrecht zu einer Achse des Behälters, vorzugsweise senkrecht zur Längsachse des Behälters angeordnet, so dass dadurch der Behälter in eine zentrale Kammer und zwei Außenkammern unterteilt wird.

Die Filtereinrichtungen sind derart ausgestaltet, dass sie den auf sie ausgeübten Drücken strukturell widerstehen können. Als für die in der erfindungsgemäßen Vorrichtung eingesetzten Filtereinrichtungen geeignete Materialien können beispielsweise Eisen, (rostfreier) Stahl, Keramik, GFK und dergleichen genannt werden.

Die Filtereinrichtungen weisen weiter eine bestimmte Porengröße auf, wobei beide Filtereinrichtungen die gleiche oder auch eine unterschiedliche Porengröße aufweisen können. Gemäß einer speziellen Ausführungsform weist die erste Filtereinrichtung eine Porengröße auf, die größer ist als die der zweiten Filtereinrichtung (Grobfilter und Feinfilter). Die Porengröße der Filter hängt im Allgemeinen von den aufzutrennenden Stoffen ab, bewegt sich jedoch generell im Bereich von 0,01 - 5 mm, vorzugsweise 0,1 - 3 mm. Gemäß einer Ausführungsform kann sich die Porengröße für einen Grobfilter im Bereich von 0,3 - 1 mm bewegen, vorzugsweise 0,5 - 0,8 mm, und für einen Feinfilter 0,01 - 0,3 mm, vorzugsweise von etwa 0,05 - 0,2 mm.

Der Begriff Filtereinrichtung, wie hier verwendet, umfasst nicht nur einzelne Filter, sondern auch Filterkombinationen aus mehreren in Fließrichtung sequenziell angeordneten Filtern, die dann die jeweilige Einrichtung ausbilden und auch jeweils aus unterschiedlichen Materialien bestehen können.

Die Außendurchmesser der Filtereinrichtungen entsprechen im Wesentlichen dem Innendurchmesser des Behälters, so dass durch deren Anordnung im Behälter dieser in die zentrale Kammer, die erste Außenkammer und die zweite Außenkammer unterteilt wird. Die Filtereinrichtungen können mit dem Behälter einstückig vorliegen, oder ab- bzw. herausnehmbar darin angeordnet sein, mit der Maßgabe, dass ein im Wesentlichen dichtender Abschluss erfolgt, so dass die durch den Filter zu pressende Flüssigkeit im Wesentlichen ausschließlich durch den Filter gelangt. Gemäß einer Ausführungsform können die Filtereinrichtungen von außen über eine geeignete Einrichtung, beispielsweise einer Klappe, in bzw. aus dem Behälter eingebracht bzw. entfernt werden, was den Einsatz unterschiedlicher Filtereinrichtungen mit unterschiedlicher Porengröße für verschiedene Einsatzzwecke ermöglicht.

In einer Ausführungsform weist die zentrale Kammer ein größeres Volumen auf als die beiden Außenkammern. In einer weiteren Ausführungsform weisen alle drei Kammern unterschiedliche Volumina auf und in einer weiteren Ausführungsform weisen alle drei Kammern im Wesentlichen gleiche Volumina auf.

In der durch die beiden Filtereinrichtungen definierten zentralen Kammer ist eine bewegliche Platte angeordnet, die im Wesentlichen mit der Innenwandung des Behälters abdichtet. Die Platte ist aus (rostfreiem) Stahl, Aluminium, Keramik oder geeigneten Kunststoffen wie beispielsweise GFK gefertigt und kann als Kolben geformt sein. Die Platte dichtet beispielsweise mittels einem oder mehrerer O-Ringe zu der Innenwandung des Behälters ab, wobei die Abdichtung ohne starke Einschränkung der Bewegungsfähigkeit der Platte innerhalb des Behälters erfolgt.

Die Platte ist innerhalb der durch die beiden Filtereinrichtungen definierten zentralen Kammer (16) entlang derselben Achse, auf der auch die beiden Filtereinrichtungen angeordnet sind, bis zu einem Berühren der jeweiligen Filtereinrichtung beweglich.

Zur Bewegung der Platte können verschiedene und dem Fachmann bekannte Einrichtungen verwendet werden, wie beispielsweise Zylinder mit Schraubgewinde oder Druckzylinder. In einer bevorzugten Ausführungsform werden ein und/oder mehr, bevorzugt zwei hydraulisch angetriebene Druckzylinder zum Bewegen der Platte verwendet. Alternativ ist ein Antrieb der Zylinder mit einer Trapezgewindespindel vorgesehen.

Die mindestens eine Bewegungseinrichtung kann mit der Platte sowohl innerhalb des Behälters, als auch außerhalb des Behälters verbunden sein. In einer bevorzugten Ausführungsform sind zwei Druckzylinder als Bewegungseinrichtung mit der Platte innerhalb des Behälters und innerhalb der zentralen Kammer verbunden. Dabei durchstoßen sie die Filtereinrichtungen, die entsprechend jeweils ein abdichtendes Durchgangsloch aufweisen.

Die Leitungen der Vorrichtung bestehen beispielsweise aus (rostfreiem) Stahl, Aluminium, Keramik oder geeigneten Kunststoffen wie beispielsweise GFK.

Alle Leitungen sind steuerbar, was im Sinne der Erfindung bedeutet, dass der Zu- und/oder Abfluss mittels einem oder mehrerer Ventile oder anderer geeigneter Einrichtungen reguliert werden kann.

In einer bevorzugten Ausführungsform ist jede Leitung durch je ein Ventil gesteuert.

Die erste Leitung bzw. die ersten Leitungen münden in der zentralen Kammer in der Nähe der ersten bzw. zweiten Filtereinrichtung und dienen dem Zuführen der zu separierenden/aufzutrennenden Flüssigkeit.

In der ersten Ausführungsform der vorliegenden Erfindung verbindet die zweite Leitung die erste Außenkammer mit der zentralen Kammer und mündet nahe der zweiten Filtereinrichtung in der zentralen Kammer. Über diese Leitung wird das durch die erste Filtereinrichtung gepresste Filtrat zurück in die zentrale Kammer auf die der Platte und der ersten Filtereinrichtung gegenüberliegende Seite überführt. Die dritte Leitung mündet in der zweiten Außenkammer und dient dem Abführen des zweiten Filtrats, nachdem das erste Filtrat durch die zweite Filtereinrichtung gepresst wurde.

In der zweiten Ausführungsform der vorliegenden Erfindung münden die zweiten Leitungen in der ersten und zweiten Außenkammer und dienen dem Abführen des Filtrats, nachdem die zu separierende Flüssigkeit durch die erste bzw. die zweite Filtereinrichtung gepresst wurde.

In der vorliegenden Erfindung ist mindestens eine verschließbare und mit dem Behälter abdichtende Öffnung in der zentralen Kammer angeordnet, durch die der an den Filtereinrichtungen entstehende Filterkuchen entfernt werden kann.

In einer Ausführungsform ist in der zentralen Kammer mehr als eine verschließbare Öffnung angeordnet.

In einer weiteren Ausführungsform sind die mehreren Öffnungen den Filtereinrichtungen jeweils benachbart angeordnet. In einer bevorzugten Ausführungsform ist jeder Filtereinrichtung eine Öffnung benachbart.

In weiteren Ausführungsformen sind jeder Filtereinrichtung zwei, drei oder auch mehr als vier oder fünf Öffnungen benachbart angeordnet.

Durch Anordnen von mindestens je einer Öffnung nahe jeder Filtereinrichtung kann die Filterkuchendicke gesteuert werden. Die Steuerung der Filterkuchendicke erfolgt dann beispielsweise durch Öffnen der Öffnungen während des Betriebs, wobei der an der Filtereinrichtung anstehende Filterkuchen je nach Position der mindestens einen Öffnung ganz oder teilweise durch die Öffnung aus der zentralen Kammer heraus fällt oder dadurch entfernt werden kann. Durch eine sequenzielle Anordnung mehrerer Öffnungen kann durch entsprechendes Öffnen die Dicke des Filterkuchens vor der jeweiligen Filtereinrichtung gesteuert werden.

In einer bevorzugten Ausführungsform sind die Öffnungen Klappen, die sich manuell und/oder automatisch nach außen öffnen lassen.

In einer weiteren Ausführungsform ist an mindestens einem, bevorzugt an beiden Filtereinrichtungen mindestens ein Schaber zum Abschaben des an den Filtereinrichtungen auf der zur zentralen Kammer gerichteten Seite anwachsenden Filterkuchens angeordnet. Bevorzugt ist der Schaber ein automatischer Schaber.

In einer weiteren Ausführungsform sind die jeweiligen Schaber zusätzlich innerhalb der inneren Kammer in Richtung der bestimmten Achse beweglich, um so unterschiedlich dicke Schichten von dem Filterkuchen abzuschaben.

In einer Ausführungsform der vorliegenden Erfindung wird der an den Filtereinrichtungen entstehende Filterkuchen nach einem oder nach mehreren Zyklen teilweise oder ganz entfernt. Das Entfernen des Filterkuchens erfolgt abhängig von der zu separierenden Flüssigkeit, dem gewünschten Reinheitsgrad und der Anzahl der gefahrenen Zyklen. Ein Zyklus bedeutet für eine bestimmte Menge der zu separierenden Flüssigkeit das Durchlaufen der aller Schritte von Einbringen in die Vorrichtung zur Flüssigkeits-separation bis zum Entfernen aus der Vorrichtung.

Die Vorteile der Vorrichtungen und der Verfahren werden sowohl in der Qualität und Quantität des Filtrats der separierten Flüssigkeit, als auch hinsichtlich ökonomischer Aspekte deutlich.

Durch die Filtrierung der zu separierenden Flüssigkeit in einer erfindungsgemäßen Vorrichtung und unter Ausnutzung zumindest eines Teils des an den Filtern anstehenden Filterkuchens als weiteren oder auch Vor-Filter, wird eine außerordentliche Reinheit des Filtrats erwirkt. Beispielsweise kann der Phosphatgehalt in Rohgülle durch das erfindungsgemäße Verfahren und die erfindungsgemäße Vorrichtung um bis zu 75 % reduziert werden. Eine nochmals erhöhte Reinheit kann mit der doppelten Filtrierung unter Verwendung der Vorrichtung der ersten Ausführungsform erreicht werden.

Durch eine sequenzielle Anordnung der mehr als einen Öffnung kann die Dicke des Filterkuchens vor dem Filter gesteuert werden, so dass eine optimale Ausnutzung des Filterkuchens als Vorfilter erreicht wird und so dem eigentlichen Filter eine erhöhte Lebensdauer ermöglicht wird. Darüber hinaus verbessert die Nutzung des Filterkuchens das qualitative Ergebnis des Filtrats.

Betriebswirtschaftlich von besonderer Bedeutung ist die Tatsache, dass im Gegensatz zu beispielsweise der Schneckenpressung oder der Zentrifugalabscheidung in der vorliegenden Erfindung auf die Nutzung von rotierenden Bauteilen verzichtet wird, die einen erhöhten Wartungs- und Reinigungsaufwand benötigen. Darüber hinaus ist durch die erfindungsgemäßen Vorrichtungen eine Fremdpumpenleistung zur Förderung der zu separierenden/zu trennenden Flüssigkeit in die Vorrichtung und innerhalb der Vorrichtung nicht nötig, da durch Bewegen der Platte entsprechende Saug- und Pressdrücke entstehen, die die Flüssigkeit und das Filtrat bewegen. Entsprechende Beschickungspumpen fallen daher weg.

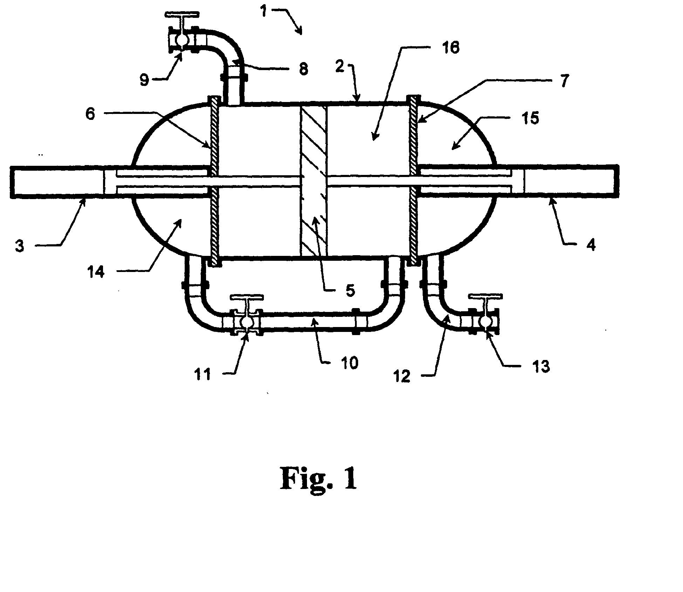

Die erste Ausführungsform der vorliegenden Erfindung wird anhand der Fig. 1 näher erläutert.

In Fig. 1 ist mit 1 insgesamt eine Vorrichtung zur Flüssigkeitsseparation gezeigt, die aus einem zylindrischen Behälter 2 besteht, der durch zwei Filtereinrichtungen 6, 7 in drei Teile unterteilt wird: Eine erste und eine zweite Außenkammer 14, 15 und die zwischen beiden Filtereinrichtungen liegende zentrale Kammer 16.

Durch die doppelt wirkende Platte 5, die als Kolben ausgebildet ist und die durch zwei Druckzylinder 3, 4 innerhalb des zylindrischen Behälters 2 zwischen den beiden Filtereinrichtungen 6, 7 bewegt werden kann, können sehr hohe Verfahrensdrücke realisiert werden.

In der Ausgangsstellung befindet sich die Platte 5 in einer ersten Position, in der die Öffnung der ersten Leitung 8 von Platte 5 verschlossen ist. Im Betrieb wird die Platte 5 durch Druckzylinder 3 in Richtung des Feinfilters 7 gedrückt, wobei in der zentralen Kammer 16 zwischen dem Grobfilter 6 und der Platte 5 ein Unterdruck entsteht. Durch Öffnen des Ventils 9 wird durch die entstandene Saugwirkung in der zentralen Kammer 16 und ohne Einsatz von Fremdpumpenleistung die zu separierende Flüssigkeit, beispielsweise Rohgülle, in die zentrale Kammer 16 gefördert.

Nach Erreichen des gewünschten Füllstandes schließt Ventil 9 und die Platte 5 wird mittels Druckzylinder 4 in die entgegengesetzte Richtung - in Richtung des Grobfilters 6 - gedrückt. Die Platte 5 und der in der zentralen Kammer 16 entstehende Druck zwängt daraufhin die Rohgülle durch die Absiebung des Grobfilters 6. Auf der Seite des Grobfilters 6, die in die zentrale Kammer 16 zeigt, sammelt sich der erste Feststoffanteil und bildet den ersten so genannten Filterkuchen, der für die nachfolgend durch die Vorrichtung laufende Rohgülle als Vorfilter Verwendung findet. Die Platte 5 wird solange in Richtung des Grobfilters 6 bewegt, bis der Filterkuchen den notwendigen Trockenheitsgrad erreicht hat.

Jenseits des Grobfilters 6 sammelt sich der filtrierte Flüssigkeitsanteil in Außenkammer 14 und wird durch Öffnen des Ventils 11 und durch Verbindungsleitung 10 wiederum ohne Fremdpumpenleistung und mittels des durch Platte 5 aufgebauten Überdrucks in der ersten Außenkammer 14 bzw. aufgrund des entstehenden Saugdrucks in der zentralen Kammer 16 in diese zurückgeleitet. Nach erfolgter Einleitung wird Ventil 11 geschlossen und Druckzylinder 3 bewegt die Platte 5 in die entgegengesetzte Richtung - in Richtung des Feinfilters 7. Dabei wird die sich in der zentralen Kammer 16 befindliche vorfiltrierte Flüssigkeit aufgrund des sich aufbauenden Drucks durch die Absiebung des Feinfilters 7 in Außenkammer 15 gezwängt. Aus Außenkammer 15 wird das Filtrat durch Öffnen von Ventil 13 und aufgrund des in Außenkammer 15 herrschenden Überdrucks über Leitung 12 aus der Vorrichtung entfernt. Das so entstehende Filtrat und der davon abgetrennte Feststoff können im Anschluss weiter verwendet werden.

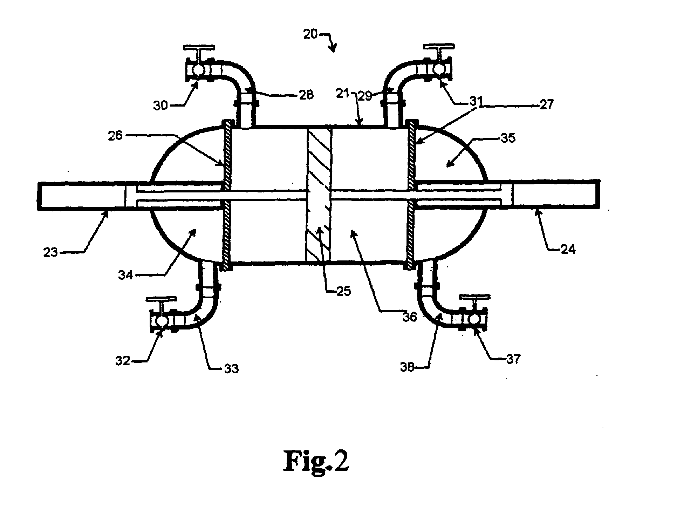

Die zweite Ausführungsform der vorliegenden Erfindung wird anhand der Fig. 2 näher erläutert.

In Fig. 2 ist mit 20 insgesamt eine Vorrichtung zur Flüssigkeitsseparation gezeigt, die aus einem zylindrischen Behälter 21 besteht, der durch zwei Filtereinrichtungen 26, 27 in drei Teile unterteilt wird: Eine erste und eine zweite Außenkammer 34, 35 und die zwischen beiden Filtereinrichtungen liegende zentrale Kammer 36.

Durch die doppelt wirkende Platte 25, die als Kolben ausgebildet ist und die durch zwei Druckzylinder 23, 24 innerhalb des zylindrischen Behälters 21 zwischen den beiden Filtereinrichtungen 26, 27 bewegt werden kann, können sehr hohe Verfahrensdrücke realisiert werden.

In der Ausgangsstellung befindet sich die Platte 25 entweder mittig in der zentralen Kammer oder nahe bzw. direkt an einer der ersten Leitungen 28, 29. Eine der ersten Leitungen 28, 29 kann von der Platte 25 verschlossen sein. Im Betrieb wird die Platte 25 beispielsweise durch Druckzylinder 23 in Richtung des Filters 27 gedrückt, wobei in der zentralen Kammer 36 zwischen dem Filter 26 und der Platte 25 ein Unterdruck entsteht. Durch Öffnen des Ventils 30 wird durch die entstandene Saugwirkung in der zentralen Kammer 36 und ohne Einsatz von Fremdpumpenleistung die zu separierende Flüssigkeit, beispielsweise Rohgülle, in die zentrale Kammer 36 gefördert.

Nach Erreichen des gewünschten Füllstandes schließt Ventil 30 und die Platte 25 wird mittels Druckzylinder 24 in die entgegengesetzte Richtung - in Richtung des Filters 26 - gedrückt. Die Platte 25 und der in der zentralen Kammer 36 entstehende Druck zwängt daraufhin die Rohgülle durch die Absiebung des Filters 26. Auf der Seite des Filters 26, die in die zentrale Kammer 36 zeigt, sammelt sich der Feststoffanteil und bildet den so genannten Filterkuchen, der für die nachfolgend durch die Vorrichtung laufende Rohgülle als Vorfilter Verwendung findet. Die Platte 25 wird solange in Richtung des Filters 26 bewegt, bis der Filterkuchen den notwendigen Trockenheitsgrad erreicht hat.

Jenseits des Filters 26 sammelt sich der filtrierte Flüssigkeitsanteil in Außenkammer 34 und kann durch Öffnen des Ventils 32 und durch Leitung 33 wiederum ohne Fremdpumpenleistung und mittels des durch Platte 25 aufgebauten Überdrucks aus der ersten Außenkammer 34 abgeleitet werden.

Zeitgleich mit der Bewegung der Platte in Richtung des Filters 26 entsteht zwischen dem Filter 27 und der Platte 25 ein Unterdruck. Durch Öffnen des Ventils 31 und durch die entstandene Saugwirkung in der zentralen Kammer 36 und ohne Einsatz von Fremdpumpenleistung wird weitere zu separierende Flüssigkeit in die zentrale Kammer 36 durch Leitung 29 gefördert.

Durch Bewegen der Platte 25 in Richtung des Filters 27 wird die sich in der zentralen Kammer 36 befindliche unfiltrierte Flüssigkeit aufgrund des sich aufbauenden Drucks durch die Absiebung des Filters 27 in Außenkammer 35 gezwängt, wobei sich der Feststoffanteil sammelt und den Filterkuchen an Filter 27 bildet, der ebenfalls für die nachfolgend durch die Vorrichtung laufende Rohgülle als Vorfilter Verwendung findet. Aus der Außenkammer 35 kann das Filtrat durch Öffnen von Ventil 37 und aufgrund des in Außenkammer 35 herrschenden Überdrucks über Leitung 38 aus der Vorrichtung entfernt werden.

Weitere nicht explizit aufgeführte Anwendungsbeispiele werden dem Fachmann anhand des Aufbaus der Vorrichtung und des Verfahrens ersichtlich.

## Patentansprüche

1. Vorrichtung zur Flüssigkeitsseparation (1), umfassend
einen Behälter (2) mit zwei voneinander räumlich beabstandeten ersten und zweiten Filtereinrichtungen (6, 7),**dadurch gekennzeichnet, dass** die Filtereinrichtungen (6, 7) zu einer vorbestimmten Achse des Behälters im Wesentlichen senkrecht angeordnet sind und den Behälter (2) in eine erste und eine zweite Außenkammer (14, 15) und eine zentrale Kammer (16) unterteilen,
mindestens eine Einrichtung zur Bewegung (3, 4) einer in der zentralen Kammer (16) angeordneten Platte (5) senkrecht entlang der vorbestimmten Achse des Behälters (2), wobei der äußere Umfang der Platte (5) mit dem inneren Umfang der zentralen Kammer (16) im Wesentlichen abschließt,
eine steuerbare erste Leitung (8) zum Zuführen der zu separierenden Flüssigkeit, die in der zentralen Kammer (16) nahe der ersten Filtereinrichtung (6) mündet,
eine steuerbare zweite Leitung (10), die die erste Außenkammer (15) mit der zentralen Kammer (16) verbindet und in diese nahe der zweiten Filtereinrichtung (7) mündet,
eine steuerbare dritte Leitung (12) zum Abführen des Filtrats, die in der zweiten Außenkammer (15) mündet, und
mindestens eine zur Entfernung von Filterkuchen verschließbare Öffnung in der zentralen Kammer (16).

2. Vorrichtung nach Anspruch 1, worin die erste Filtereinrichtung (6) mindestens einen Grobfilter und die zweite Filtereinrichtung (7) mindestens einen Feinfilter umfasst, vorzugsweise worin der mindestens eine Grobfilter eine Porengröße von 0,1 bis 3,0 mm aufweist, und der mindestens eine Feinfilter eine Porengröße von 0,05 - 0,2 mm aufweist.

3. Vorrichtung nach einem der Ansprüche 1 oder 2, worin die Einrichtung zur Bewegung (3, 4) eine Trapezgewindespindel umfasst.

4. Vorrichtung nach einem der vorstehenden Ansprüche, worin in der zentralen Kammer (16) jeder Filtereinrichtung mehrere Öffnungen benachbart vorliegen.

5. Vorrichtung nach einem der vorstehenden Ansprüche, worin an mindestens einer Filtereinrichtung (6, 7) auf der zur zentralen Kammer (16) gerichteten Seite mindestens ein Schaber zum Abschaben des Filterkuchens angeordnet ist.

6. Vorrichtung nach einem der vorstehenden Ansprüche, worin die Öffnungen nach außen öffnende Klappen sind.

7. Verfahren zur Flüssigkeitsseparation, umfassend die Schritte:
a) Einbringen einer zu separierenden Flüssigkeit in eine zentrale Kammer (16) einer Vorrichtung (1) nach einem der vorstehenden Ansprüche;
b) Pressen der flüssigen Substanz durch eine erste Filtereinrichtung (6) in eine erste Außenkammer (14);
c) Rückführen des in b) entstehenden ersten Filtrats von der ersten Außenkammer (14) in die zentrale Kammer (16);
d) Pressen des ersten Filtrats durch eine zweite Filtereinrichtung (7) in eine zweite Außenkammer (15);
e) Ableiten des in d) entstehenden zweiten Filtrats aus der zweiten Außenkammer (15),
wobei das Verfahren ohne zusätzliche Pumpenleistung erfolgt.

8. Verfahren nach Anspruch 7, wobei der an den Filtereinrichtungen (6, 7) entstehende Filterkuchen nach einer bestimmten Anzahl an Zyklen teilweise oder ganz entfernt wird, vorzugsweise wobei der an den Filtereinrichtungen (6, 7) entstehende Filterkuchen durch einen automatischen Schaber teilweise oder ganz entfernt wird.

9. Verfahren nach einem der Ansprüche 7 bis 8, wobei die zu separierende Flüssigkeit Rohgülle, Klärschlamm, Deponieschlamm oder Industrieschlamm ist.

10. Vorrichtung zur Flüssigkeitsseparation (20), umfassend
einen Behälter (21) mit zwei voneinander räumlich beabstandeten ersten und zweiten Filtereinrichtungen (26, 27),
**dadurch gekennzeichnet, dass**
die Filtereinrichtungen (26, 27) zu einer vorbestimmten Achse des Behälters im Wesentlichen senkrecht angeordnet sind und den Behälter (21) in eine erste und eine zweite Außenkammer (34, 35) und eine zentrale Kammer (36) unterteilen,
mindestens eine Einrichtung zur Bewegung (23, 24) einer in der zentralen Kammer (36) angeordneten Platte (25) senkrecht entlang der vorbestimmten Achse des Behälters (21), wobei der äußere Umfang der Platte (25) mit dem inneren Umfang der zentralen Kammer (36) im Wesentlichen abschließt,
mehrere steuerbare erste Leitungen (28, 29) zum Zuführen der zu separierenden Flüssigkeit, die in die zentrale Kammer (36) nahe der ersten und zweiten Filtereinrichtung (26, 27) münden,
mehrere steuerbare zweite Leitungen (33, 38) zum Abführen des Filtrats aus der ersten und zweiten Außenkammer (34, 35), und
mindestens eine zur Entfernung von Filterkuchen verschließbare Öffnung in der zentralen Kammer (36).

11. Vorrichtung nach Anspruch 10, worin die erste und zweite Filtereinrichtung (26, 27) mindestens einen Grobfilter oder mindestens einen Feinfilter umfasst, vorzugsweise worin der mindestens eine Grobfilter eine Porengröße von 0,1 bis 3,0 mm aufweist oder der mindestens eine Feinfilter eine Porengröße von 0,05 - 0,2 mm aufweist.

12. Vorrichtung nach einem der Ansprüche 10 oder 11, worin in der zentralen Kammer (36) jeder Filtereinrichtung mehrere Öffnungen benachbart vorliegen.

13. Vorrichtung nach einem der Ansprüche 10 bis 12, worin an mindestens einer Filtereinrichtung (26, 27) auf der zur zentralen Kammer (36) gerichteten Seite mindestens ein Schaber zum Abschaben des Filterkuchens angeordnet ist, oder worin die Öffnungen nach außen öffnende Klappen sind.

14. Verfahren zur Flüssigkeitsseparation, umfassend die Schritte:
a) Einbringen einer zu separierenden Flüssigkeit in eine zentrale Kammer (36) einer Vorrichtung (20) nach einem der Ansprüche 10 bis 13;
b) Pressen der flüssigen Substanz durch eine erste bzw. zweite Filtereinrichtung (26, 27) in eine erste bzw. zweite Außenkammer (34, 35);
c) Ableiten des in b) entstehenden Filtrats aus der ersten bzw. zweiten Außenkammer (34, 35),
wobei das Verfahren ohne zusätzliche Pumpenleistung erfolgt.

15. Verfahren nach Anspruch 14,
wobei der an den Filtereinrichtungen (26, 27) entstehende Filterkuchen nach einer bestimmten Anzahl an Zyklen teilweise oder ganz entfernt wird, vorzugsweise wobei der an den Filtereinrichtungen (26, 27) entstehende Filterkuchen durch einen automatischen Schaber teilweise oder ganz entfernt wird, oder
wobei die zu separierende Flüssigkeit Rohgülle, Klärschlamm, Deponieschlamm oder Industrieschlamm ist.

## Claims

1. A device for liquid separation (1), comprising
a container (2) with two first and second filtering devices (6, 7) spaced apart from one another, **characterised in that** the filtering devices (6, 7) are disposed essentially normal to a predetermined axis of the container and divide the container (2) into a first and a second outer chamber (14, 15) and a central chamber (16),
at least one device for the movement (3, 4) of a plate (5) disposed in the central chamber (16) vertically along the predetermined axis of the container (2), wherein the outer periphery of the plate (5) essentially terminates with the inner periphery of the central chamber (16),
a controllable first line (8) for supplying the liquid to be separated, said line emerging in the central chamber (16) close to the first filtering device (6),
a controllable second line (10), which connects the first outer chamber (15) to the central chamber (16) and emerges into the latter close to the second filtering device (7),
a controllable third line (12) for draining the filtrate, said line emerging in the second outer chamber (15), and
at least one opening in the central chamber (16) which can be closed in order to remove filter cake.

2. The device according to claim 1, wherein the first filtering device (6) comprises at least one coarse filter and the second filtering device (7) at least one fine filter, preferably wherein the at least one coarse filter has a pore size of 0.1 to 3.0 mm and the at least one fine filter has a pore size of 0.05 - 0.2 mm.

3. The device according to any one of claims 1 or 2, wherein the device for the movement (3, 4) comprises a trapezoidal threaded spindle.

4. The device according to any one of the preceding claims, wherein a plurality of openings are present adjacent to one another in the central chamber (16) of each filtering device.

5. The device according to any one of the preceding claims, wherein at least one scraper for scraping off the filter cake is disposed on at least one filtering device (6, 7) on the side facing the central chamber (16).

6. The device according to any one of the preceding claims, wherein the openings are flaps opening outwards.

7. A method for liquid separation, comprising the steps:
a) introduction of the liquid to be separated into a central chamber (16) of a device (1) according to any one of the preceding claims;
b) pressing the liquid substance through a first filtering device (6) into the first outer chamber (14) ;
c) returning the first filtrate arising in b) from the first outer chamber (14) into the central chamber (16);
d) pressing the first filtrate through a second filtering device (7) into a second outer chamber (15);
e) draining the second filtrate arising in d) out of the second outer chamber (15),
wherein the method takes place without additional pumping capacity.

8. The method according to claim 7, wherein the filter cake arising on the filtering devices (6, 7) is partially or completely removed after a specific number of cycles, preferably wherein the filter cake arising on the filtering devices (6, 7) is partially or completely removed by an automatic scraper.

9. The method according to any one of claims 7 to 8, wherein the liquid to be separated is raw liquid manure, sewage sludge, waste disposal sludge or industrial sludge.

10. A device for liquid separation (20), comprising
a container (21) with two first and second filtering devices (26, 27) spaced apart from one another, **characterised in that**
the filtering devices (26, 27) are disposed essentially normal to a predetermined axis of the container and divide the container (21) into a first and a second outer chamber (34, 35) and a central chamber (36),
at least one device for the movement (23, 24) of a plate (25) disposed in the central chamber (36) vertically along the predetermined axis of the container (21), wherein the outer periphery of the plate (25) essentially terminates with the inner periphery of the central chamber (36),
a plurality of controllable first lines (28, 29) for supplying the liquid to be separated, said lines emerging in the central chamber (36) close to the first and second filtering device (26, 27),
a plurality of controllable second lines (33, 38) for draining the filtrate from the first and second outer chambers (34, 35), and
at least one opening in the central chamber (36) which can be closed in order to remove filter cake.

11. The device according to claim 10, wherein the first and second filtering device (26, 27) comprises at least one coarse filter or at least one fine filter, preferably wherein the at least one coarse filter has a pore size of 0.1 to 3.0 mm and the at least one fine filter has a pore size of 0.05 - 0.2 mm.

12. The device according to any one of claims 10 or 11, wherein a plurality of openings are present adjacent to one another in the central chamber (36) of each filtering device.

13. The device according to any one of claims 10 to 12, wherein at least one scraper for scraping off the filter cake is disposed on at least one filtering device (26, 27) on the side facing the central chamber (36), or wherein the openings are flaps opening outwards.

14. A method for liquid separation, comprising the steps:
a) introduction of the liquid to be separated into a central chamber (36) of a device (20) according to any one of the claims 10 to 13;
b) pressing the liquid substance through a first and respectively second filtering device (26, 27) into a first and respectively second outer chamber (34, 35);
c) draining the filtrate arising in b) out of the first and respectively second outer chamber (34, 35),
wherein the method takes place without additional pumping capacity.

15. The method according to claim 14,
wherein the filter cake arising on the filtering devices (26, 27) is partially or completely removed after a specific number of cycles, preferably wherein the filter cake arising on the filtering devices (26, 27) is partially or completely removed by an automatic scraper, or
wherein the liquid to be separated is raw liquid manure, sewage sludge, waste disposal sludge or industrial sludge.

## Revendications

1. Dispositif pour la séparation de liquides (1), comprenant
un récipient (2) avec deux systèmes de filtrage (6, 7), un premier et un deuxième, écartés l'un de l'autre dans l'espace, **caractérisé en ce que** les systèmes de filtrage (6, 7) sont disposés sensiblement à la perpendiculaire par rapport à un axe prédéfini du récipient et divisent le récipient (2) en un premier et un deuxième compartiment extérieur (14, 15) et en un compartiment central (16),
au moins un système pour le déplacement (3, 4) d'une plaque (5) disposée dans le compartiment central (16), à la perpendiculaire le long de l'axe prédéfini du récipient (2), la périphérie extérieure de la plaque (5) se terminant sensiblement sur la périphérie intérieure du compartiment central (16),
un premier conduit (8) pilotable pour amener le liquide à séparer qui débouche dans le compartiment central (16), à proximité du premier système de filtrage (6),
un deuxième conduit (10) pilotable, qui relie le premier compartiment extérieur (15) avec le compartiment central (16) et débouche dans ce dernier, à proximité du deuxième système de filtrage (7),
un troisième conduit (12) pilotable pour évacuer le produit filtré, qui débouche dans le deuxième compartiment extérieur (15) et
au moins une ouverture fermable dans le compartiment central (16), pour éliminer le gâteau de filtre.

2. Dispositif selon la revendication 1, dans lequel le premier système de filtrage (6) comprend au moins un filtre grossier et le deuxième système de filtrage (7) comprend au moins un filtre fin, de préférence dans lequel l'au moins un filtre grossier présente une grosseur de pores de 0,1 à 3,0 mm et l'au moins un filtre fin présente une grosseur de pores de 0,05 à 0,2 mm.

3. Dispositif selon l'une quelconque des revendications 1 ou 2, dans lequel le système pour le déplacement (3, 4) comprend une broche à filet trapézoïdal.

4. Dispositif selon l'une quelconque des revendications précédentes, dans lequel dans le compartiment central (16) de chaque système de filtrage, plusieurs ouvertures voisines sont présentes.

5. Dispositif selon l'une quelconque des revendications précédentes, dans lequel sur au moins un système de filtrage (6, 7), sur le côté dirigé vers le compartiment central (16) est disposé au moins un racloir pour racler le gâteau de filtre.

6. Dispositif selon l'une quelconque des revendications précédentes, dans lequel les ouvertures sont des clapets s'ouvrant vers l'extérieur.

7. Procédé pour la séparation de liquides, comprenant les étapes :
a) introduction d'un liquide à séparer dans un compartiment central (16) d'un dispositif (1) selon l'une quelconque des revendications précédentes ;
b) pressage de la substance liquide à travers un premier système de filtrage (6) dans un premier compartiment extérieur (14) ;
c) recyclage du premier produit filtré obtenu lors de b) du premier compartiment extérieur (14) dans le compartiment central (16) ;
d) pressage du premier produit filtré à travers un deuxième système de filtrage (7) dans un deuxième compartiment extérieur (15) ;
e) évacuation du deuxième produit filtré obtenu lors de d) hors du deuxième compartiment extérieur (15),
le procédé s'effectuant sans puissance de pompage supplémentaire.

8. Procédé selon la revendication 7, après un certain nombre de cycles, le gâteau de filtre obtenu sur les systèmes de filtrage (6, 7) étant éliminé totalement ou en partie, de préférence le gâteau de filtre obtenu sur les systèmes de filtrage (6, 7) étant éliminé totalement ou en partie par un racloir automatique.

9. Procédé selon l'une quelconque des revendications 7 à 8, le liquide à séparer étant du lisier brut, de la boue de curage, de la boue de décharge ou de la boue industrielle.

10. Dispositif pour la séparation de liquides (20), comprenant
un récipient (21) avec deux systèmes de filtrage (26, 27), un premier et un deuxième, écartés l'un de l'autre dans l'espace,
**caractérisé en ce que**
les systèmes de filtrage (26, 27) sont disposés sensiblement à la perpendiculaire par rapport à un axe prédéfini du récipient et divisent le récipient (21) en un premier et un deuxième compartiment extérieur (34, 35) et en un compartiment central (36),
au moins un système pour le déplacement (23, 24) d'une plaque (25) disposée dans le compartiment central (36), à la perpendiculaire le long de l'axe prédéfini du récipient (21), la périphérie extérieure de la plaque (25) se terminant sensiblement sur la périphérie intérieure du compartiment central (36),
plusieurs premiers conduits (28, 29) pilotables pour amener le liquide à séparer qui débouchent dans le compartiment central (36), à proximité du premier et du deuxième système de filtrage (26,27),
plusieurs deuxièmes conduits (33, 38) pilotables, pour évacuer le produit filtré hors du premier et du deuxième compartiment extérieurs (34, 35), et
au moins une ouverture fermable dans le compartiment central (36), pour éliminer le gâteau de filtre.

11. Dispositif selon la revendication 10, dans lequel le premier et deuxième système de filtrage (26, 27) comprend au moins un filtre grossier ou au moins un filtre fin, de préférence dans lequel l'au moins un filtre grossier présente une grosseur de pores de 0,1 à 3,0 mm et l'au moins un filtre fin présente une grosseur de pores de 0,05 à 0,2 mm.

12. Dispositif selon l'une quelconque des revendications 10 ou 11, dans le compartiment central (36) de chaque système de filtrage, plusieurs ouvertures voisines sont présentes.

13. Dispositif selon l'une quelconque des revendications 10 à 12, dans lequel sur au moins un système de filtrage (26, 27), sur le côté dirigé vers le compartiment central (36) est disposé au moins un racloir pour racler le gâteau de filtre ou dans lequel les ouvertures sont des clapets s'ouvrant vers l'extérieur.

14. Procédé pour la séparation de liquides, comprenant les étapes :
a) introduction d'un liquide à séparer dans un compartiment central (36) d'un dispositif (20) selon l'une quelconque des revendications précédentes ;
b) pressage de la substance liquide à travers un premier système de filtrage (26, 27) dans un premier ou dans un deuxième compartiment extérieur (34, 35) ;
c) évacuation du produit filtré obtenu lors de b) hors du premier ou du deuxième compartiment extérieur (15),
le procédé s'effectuant sans puissance de pompage supplémentaire.

15. Procédé selon la revendication 14,
après un certain nombre de cycles, le gâteau de filtre obtenu sur les systèmes de filtrage (26, 27) étant éliminé totalement ou en partie, de préférence le gâteau de filtre obtenu sur les systèmes de filtrage (26, 27) étant éliminé totalement ou en partie par un racloir automatique ou
le liquide à séparer étant du lisier brut, de la boue de curage, de la boue de décharge ou de la boue industrielle.
